# FASCICULE DE BREVET EUROPEEN

(11) **EP 3 103 691 B1**
(45) Date de publication et mention de la délivrance du brevet: **05.12.2018**
(21) Numéro de dépôt: 16172659.1
(22) Date de dépôt: 02.06.2016
(51) Int. Cl.: B60T 13/14

(54) **SYSTÈME DE FREINAGE HYDRAULIQUE D'UN VÉHICULE À PLUSIEURS ESSIEUX, EN PARTICULIER D'UNE REMORQUE À PLUSIEURS ESSIEUX**
HYDRAULISCHES BREMSSYSTEM EINES MEHRACHSIGEN FAHRZEUGS, INSBESONDERE EINES MEHRACHSIGEN ANHÄNGERS
HYDRAULIC BRAKE SYSTEM FOR A MULTI-AXLE VEHICLE, IN PARTICULAR A MULTI-AXLE TRAILER

(30) Priorité: 03.06.2015 FR 1555038
(43) Date de publication de la demande: 14.12.2016
(73) Titulaire: Poclain Hydraulics Industrie, 60410 Verberie (FR)
(72) Inventeur: D'HERSIGNERIE, Cyrille, 60410 VERBERIE (FR); PRIGENT, André, 60410 VERBERIE (FR)
(74) Mandataire: Regimbeau

(56) Documents cités:
- DE-A1- 2 939 709
- FR-A1- 2 460 820
- FR-A2- 2 507 985
- US-A- 5 769 509

## Description

La présente invention concerne le domaine du freinage hydraulique de véhicules. Elle s'applique tout particulièrement au freinage hydraulique de remorques et plus précisément des remorques à essieux multiples.

De nombreux dispositifs de freinage hydraulique ont déjà été proposés.

Le document US 5769509 décrit un circuit de freinage pour une transmission électrique actionnée par une pédale qui commande un actionneur tandem de contrôle d'une pression de freinage.

Le document DE 2939709 décrit un circuit adapté pour synchroniser le freinage d'un tracteur avec une remorque comportant des moyens de détection de l'effort de traction entre les deux véhicules. La remorque utilise des moyens de freinage autonomes par rapport à l'effort de traction.

Le document FR 2460820 prévoit des moyens de commande entre un frein de parking d'un tracteur et une valve de frein de service de remorque pour limiter les risques de déplacement entre le moment où une remorque est arrêtée par son frein principal de service et le moment où elle est freinée par son frein de parking.

Le document FR 2507985 décrit un bloc de sécurité adapté, en cas de rupture d'un attelage entre un tracteur et une remorque, pour basculer un tiroir lors de la chute de pression résultant de la rupture d'attelage pour vider le contenu d'un accumulateur dans les freins.

Une réglementation européenne 2015/68 impose cependant de nouvelles contraintes.

Afin d'harmoniser le freinage hydraulique d'un convoi constitué d'un tracteur et d'une remorque agricole, le texte réglementaire 2015/68 prévoit un temps de réponse maximum de 0.6s pour que l'actionneur de la remorque le plus éloigné du tracteur donne 75% de son efficacité.

Le débit d'huile venant d'un tracteur étant limité typiquement à 140cm3 pendant ces 0.6s, le nombre d'actionneurs sur la remorque entre très vite en jeu. La plupart des actionneurs sont des vérins de diamètre 30mm et d'une course de 70 mm, ce qui correspond à un volume de 50 cm3. On pourrait trouver d'autres actionneurs moins volumineux ou ajuster au mieux la course, mais cela rajoute du coût à l'installation.

Une solution déjà envisagée pour tenter de pallier cette difficulté, consiste à embarquer une réserve d'énergie sur la remorque. Cette réserve d'énergie est généralement un accumulateur pré-gonflé en azote. Lors d'une commande de freinage, le volume stocké dans l'accumulateur vient s'ajouter aux 140 cm3 venant du tracteur.

Le dimensionnement de cette réserve d'énergie est cependant régi par le texte 2015/68. Or ce texte demande de réaliser 8 freinages complets et d'avoir encore la moitié de l'énergie d'un freinage au neuvième coup de frein. Cette règle rend donc la réserve d'énergie très volumineuse et couteuse.

Dans ce contexte, la présente invention a pour objectif de proposer une nouvelle architecture de freinage hydraulique, notamment de remorque, conçue pour répondre aux normes en vigueur.

Le but précité est atteint selon l'invention grâce à un système de freinage hydraulique du type défini en revendication 1 annexée.

Comme on le verra par la suite, l'invention permet ainsi de réduire sensiblement la capacité de l'accumulateur hydraulique.

Selon une autre caractéristique avantageuse de l'invention, l'accumulateur hydraulique est alimenté par une ligne basse pression, par l'intermédiaire d'un amplificateur de pression.

Selon une autre caractéristique avantageuse de l'invention, le système comprend une valve de séquence adaptée pour commuter le circuit hydraulique principal du véhicule tracteur sur le circuit de remplissage de l'accumulateur, lorsque le premier groupe de freinage a atteint son couple de freinage nominal. Cette disposition permet de délivrer le surplus d'huile disponible à partir du circuit hydraulique principal, au circuit de freinage associé à l'accumulateur hydraulique, soit par exemple à un deuxième groupe d'essieux dans le cas d'essieux multiples, lorsque le premier groupe a atteint son couple de freinage nominal.

L'invention concerne également un véhicule équipé d'un système de freinage du type précité.

D'autres caractéristiques, buts et avantages de la présente invention apparaîtront à la lecture de la description détaillée qui va suivre et en regard des dessins annexés donnés à titre d'exemple non limitatif et sur lesquels :
- la figure 1 représente l'architecture du système de freinage de remorque conforme à la présente invention,
- la figure 2 représente l'état du système dans une phase de connexion de la remorque et de chargement de la réserve d'énergie formée par l'accumulateur hydraulique,
- la figure 3 représente l'état du système une fois la réserve d'énergie chargée,
- la figure 4 représente l'état du système dans une phase de freinage de service,
- la figure 5 représente l'état du système dans une phase de rupture d'attelage ou de dételage de la remorque,
- la figure 6 représente une variante du système conforme à la présente invention adaptée notamment pour permettre de faciliter une compatibilité avec un ABS,
- la figure 7 représente le schéma d'une application préférentielle de l'invention, et
- la figure 8a représente schématiquement un exemple de réalisation d'une valve de régulation de pression et la figure 8b représente la courbe de réponse de cette valve.

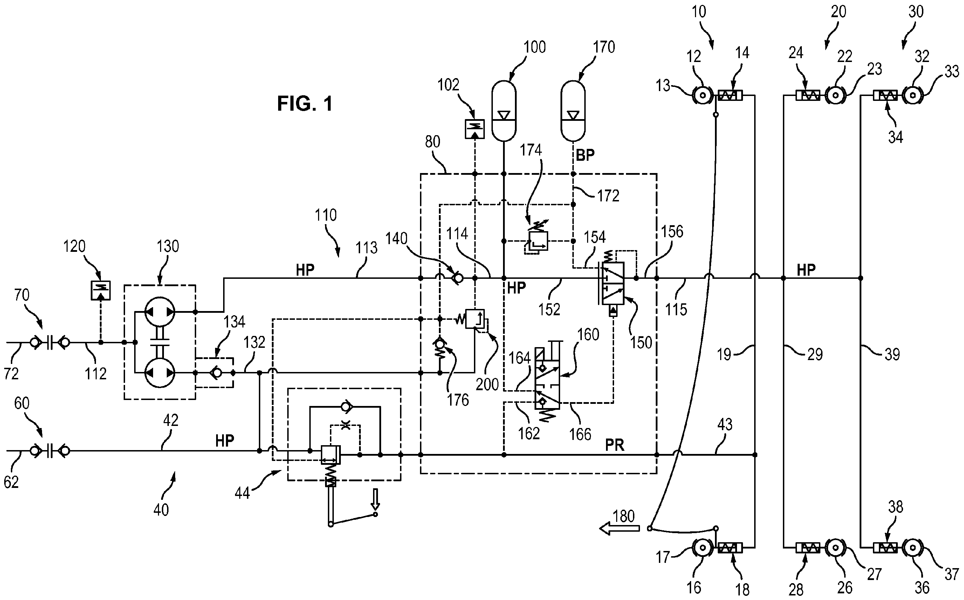

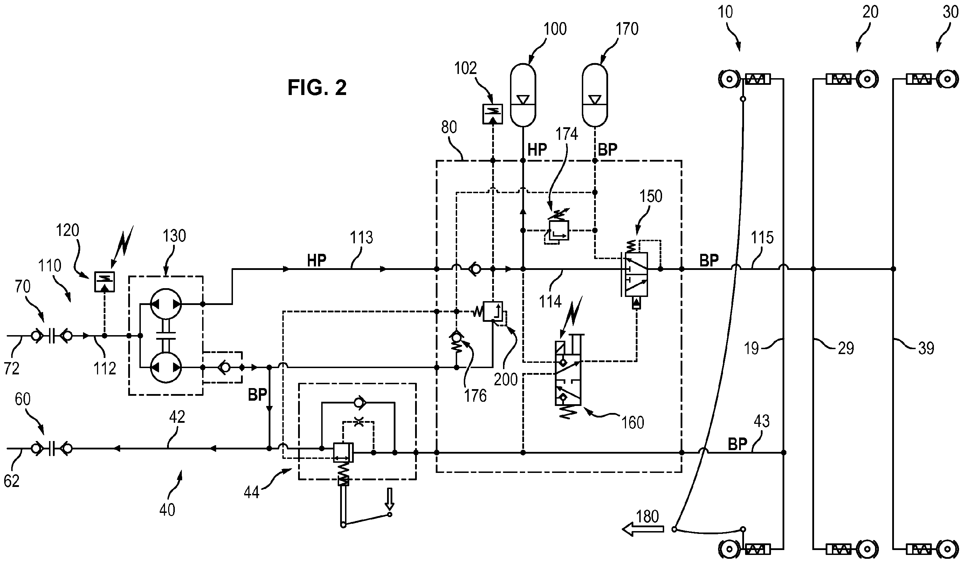

On va décrire successivement la structure du système conforme à l'invention en regard de la figure 1 annexée, puis son fonctionnement en regard des figures 2 à 5 annexées.

Sur la figure 1 annexée on a assorti de la référence « BP » les lignes destinées à être placées en basse pression, « HP » les lignes destinées à être placées en haute pression et « PR » les lignes destinées à être placées à une pression régulée lors d'une phase de freinage de service.

On a utilisé les mêmes références sur les figures 2 à 5 pour identifier les niveaux de pression des différentes lignes lors des différentes phases de fonctionnement du système.

Le circuit illustré sur la figure 1 est destiné à être intégralement embarqué sur une remorque.

On a représenté sur les figures annexées un ensemble comprenant 3 essieux 10, 20 et 30 équipant une remorque.

L'essieu 10 constitue un premier groupe d'essieux dont le freinage est assuré par le circuit hydraulique principal du véhicule tracteur.

Les deux essieux 20 et 30 constituent un deuxième groupe d'essieux dont le freinage est assuré par un accumulateur hydraulique haute pression 100 embarqué sur la remorque.

La description détaillée qui va suivre est faite en référence à des essieux 10, 20 et 30 équipant une remorque. Cette application au freinage d'une remorque est préférentielle dans le cadre de l'invention et constitue l'application principale de l'invention. Cependant l'invention n'est pas limitée à cette application particulière. L'invention peut s'appliquer au freinage de tout type de convoi et peut donc s'appliquer également au freinage des essieux montés sur le tracteur. Le cas échéant le deuxième groupe d'essieux peut ne comprendre qu'un seul essieu, comme le premier groupe. De même le cas échéant le premier groupe d'essieux peut comprendre plusieurs essieux en parallèle.

Le cas échéant l'invention peut également s'appliquer au cas particulier d'un tracteur ou d'une remorque comportant un seul essieu. Dans ce cas, l'accumulateur peut servir par exemple seulement au freinage automatique lors d'une rupture d'attelage. L'essieu unique est dans ce cas alimenté à la fois par la ligne 43 et par la ligne 115 qui seront présentées par la suite. Comme on le verra par la suite, dans ce cas une valve 160 de rupture d'attelage peut constituer des moyens de mise en oeuvre du circuit de freinage comprenant l'accumulateur 100 lors d'un freinage automatique lors d'une rupture d'attelage.

Chaque essieu 10, 20 et 30 comprend deux ensembles de roues 12, 16 ; 22, 26 ; 32, 36, associés chacun à des freins 13, 17 ; 23, 27 ; 33, 37 pilotés par un actionneur respectif 14, 18 ; 24, 28 ; 34, 38.

Les actionneurs 14, 18 ; 24, 28 ; 34, 38 sont de préférence du type à rappel par ressort.

Les actionneurs 14, 18 du premier groupe sont reliés à une ligne d'alimentation 19 elle-même reliée, par l'intermédiaire d'une valve de régulation fonction de la charge 44, à une ligne de commande 40.

Cette ligne de commande 40 reçoit une pression, typiquement comprise entre 0 bar et 150 bars, lorsqu'un freinage est demandé par le chauffeur par appui sur la pédale de frein de service.

A cette fin la ligne de commande 40 est adaptée pour être connectée, par un connecteur 60 à une ligne 62 reliée à la sortie du module piloté par la pédale de frein de service.

La ligne 62 vient de la commande des freins du tracteur. Elle délivre un débit d'huile sous pression proportionnelle à la commande de frein actionnée par l'utilisateur. Ce débit est modulé en pression par une valve de frein du type réducteur de pression, ou valve de modulation de pression alimenté par une pompe puisant dans une réserve d'huile. Une telle pompe met en relation une ligne de frein, une pompe et une réserve d'huile qui est un réservoir d'huile sous pression atmosphérique. Sur cette ligne, qui est modulée en pression, le débit peut circuler dans un sens comme dans l'autre.

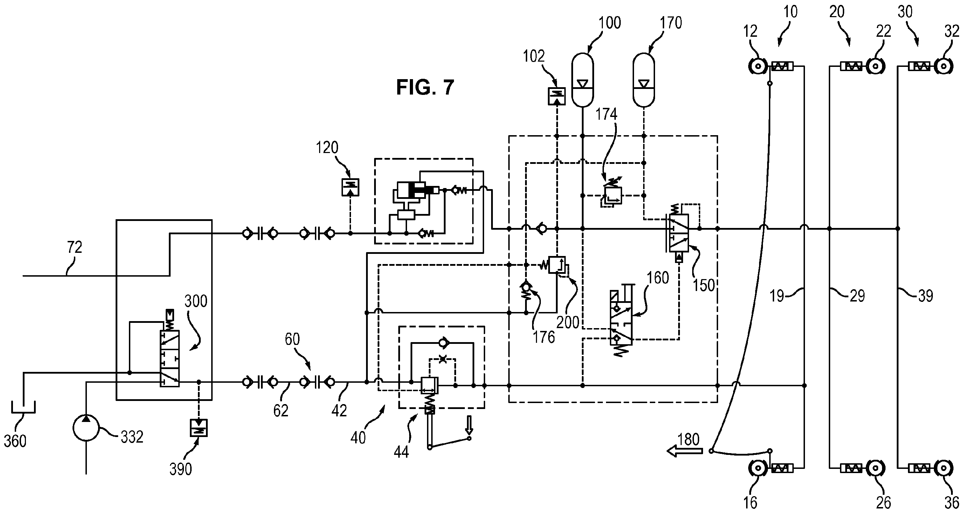

Comme on le voit sur les figures annexées, et en particulier sur la figure 7 annexée, les deux lignes 62 et 72 qui viennent du tracteur et qui alimentent les deux circuits de freinage 40, 110 placés sur la remorque, par l'intermédiaire de connecteurs 60, 70, sont distinctes et séparées.

La ligne 62 comporte une valve de freinage 300 adaptée pour délivrer une pression modulée, de préférence proportionnelle à une sollicitation.

Au contraire, la ligne 72 est quant à elle à une pression fixe, non modulable à la différence de la ligne 62. A cette fin, la ligne 72 est équipée d'une valve tout ou rien qui relie la ligne 72 soit à un réservoir, soit à la pression fixe.

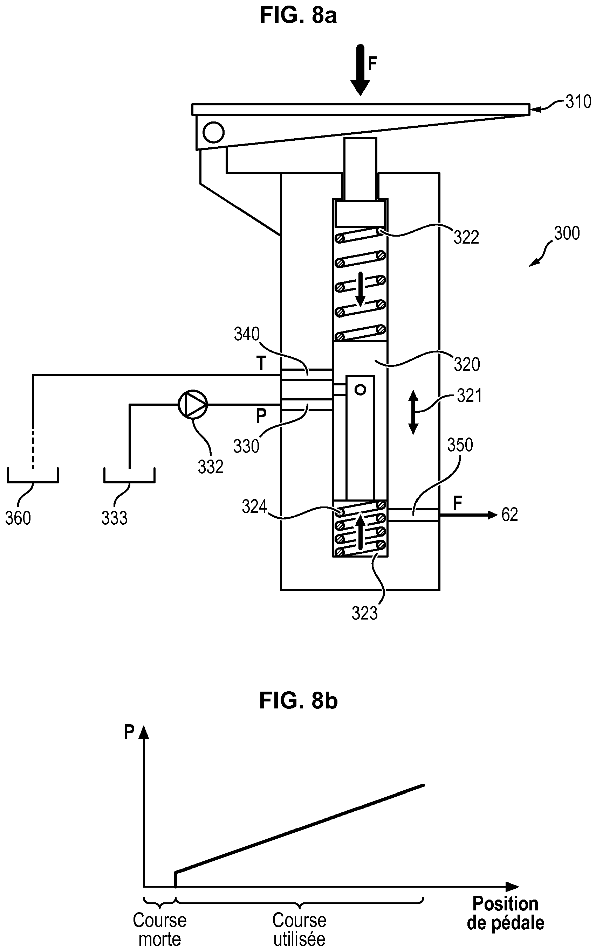

On a représenté sur la figure 8a un exemple de réalisation d'une valve de freinage 300.

Cette valve de freinage 300 qui sert de régulation de pression comporte :
- un orifice d'entrée/sortie 330 relié à une source de pression 332, telle qu'un accumulateur hydraulique, par une voie P, la voie P est donc soumise à un débit à une certaine pression correspondant à la pression délivrée par la source de pression 332,
- un orifice d'entrée/sortie 340 relié un réservoir à pression atmosphérique 360 par une voie T, et
- un orifice d'entrée/sortie 350 relié à la ligne 62 par une voie T.

Comme visible sur la figure 8a la valve 300 comprend un plongeur ou tiroir 320 monté en translation dans un cylindre 321 de manière à sélectivement mettre en communication l'orifice 350 de sortie de la voie F reliée à la ligne 62 avec l'orifice 330 de la voie P à la pression de la source de pression 332 ou avec l'orifice 340 de la voie T à la pression atmosphérique en fonction d'un degré d'actionnement d'une commande, par exemple de la pédale de frein 310.

A cet égard, la valve 300 comprend un ressort de chargement 332 mis en compression par actionnement de la commande mécanique 310 telle qu'une pédale de frein 310 (ou plus généralement de la commande mécanique progressive), tendant au déplacement du plongeur 320 pour mettre en communication la voie P avec la voie F.

La valve 300 comprend également une chambre de rétroaction 323 comprenant un ressort 324, le ressort et la chambre étant positionnés du côté opposé au ressort de chargement 322 par rapport au plongeur pour exercer une poussée antagoniste à celle du ressort de chargement.

Ainsi en l'absence d'actionnement de la pédale 310, le ressort 324 exerce une poussée sur le plongeur qui met en communication la voie T avec la voie F et vide ainsi la ligne 62.

Lors de l'actionnement de la pédale 310, le ressort 322 augmente sa poussée sur le plongeur pour mettre en communication la voie P avec la voie F et ainsi mettre en pression la ligne 62. Parallèlement, la pression augmente également dans la chambre de rétroaction 323.
La pression dans la chambre de rétroaction 323 exerce une poussée sur le plongeur 320 s'opposant à la poussée du ressort de chargement 322 résultant de l'actionnement du frein, et tendant à réduire le débit s'écoulant de la voie P à la voie F.

Lorsqu'il existe un équilibre entre la poussée du ressort de chargement 322 d'une part et la poussée exercée par la pression de fluide dans la chambre de rétroaction 323 d'autre part, le plongeur 320 se maintient en équilibre et maintient la pression dans la voie F - et dans la ligne 62 - à une valeur constante proportionnelle à la sollicitation exercée par l'organe 310.

L'équilibre dépend des caractéristiques géométriques de la valve (plongeur, cylindre) et du tarage du ressort de chargement 322. Ainsi, la valve 300 délivre une pression dans la ligne 62 et dans la voie F qui est proportionnelle à un degré d'actionnement de la pédale 310, le coefficient de proportionnalité dépendant des caractéristiques de la valve et du tarage du ressort.

On a représenté sur la figure 8b la relation entre la pression obtenue dans la ligne 62 et le degré d'actionnement de la commande mécanique 310. L'augmentation proportionnelle de la pression en fonction de la course de la commande mécanique ne commence que lorsque la course excède une couse appelée « course morte » dans laquelle la compression exercée par la pédale 310 sur le ressort de chargement 322 n'est pas suffisante pour transmettre une force sur le plongeur 321.

Lorsque la pression dans la chambre de rétroaction 323 du frein excède la pression de consigne correspondant au degré d'actionnement de la commande mécanique, la pression supplémentaire dans la chambre de rétroaction 323 pousse le plongeur pour remettre en communication la voie T avec la voie F et diminuer la pression dans la ligne 62.

La pression dans la ligne F est donc régulée quel que soit le débit circulant par F, tant que la capacité en débit de la pompe n'est pas atteinte, c'est-à-dire tant que la pompe peut fournir le débit consommé par le circuit branché sur la ligne F.

Ainsi la pression dans la voie F et la ligne 62 est régulée à tout moment en fonction du degré d'actionnement de la commande du frein.

Dans ce mode de réalisation, c'est le fonctionnement même de la valve qui permet d'obtenir cette régulation de pression.

Alternativement, le fonctionnement de la valve pourrait être remplacé par une rétroaction électrique pilotant la valve en fonction d'une valeur de pression mesurée sur la ligne 62.

A cette fin, comme illustré sur la figure 7, la valve de régulation de pression 300 peut être associée à un moyen 390 de mesure de pression dans la ligne 62, permettant de réguler la pression dans la voie F en fonction du degré d'actionnement de la commande de frein. Ce moyen de mesure permet d'assurer une rétroaction de la pression sur la ligne 62 grâce à un pilotage de la valve 300.

La source de pression 332 peut être une pompe qui prélève de l'huile dans un réservoir 333. Il peut s'agir également d'un accumulateur hydraulique. Le mouvement de défreinage du frein emmène l'huile depuis le circuit de freinage vers le réservoir 360.

L'homme du métier comprendra donc que la valve 300 peut être pilotée soit directement par un conducteur, par exemple grâce à la pédale de frein 310, soit indirectement, par un signal électrique ou hydraulique ou une action mécanique reliant une information de demande de freinage provenant du conducteur du tracteur.

La ligne de commande 40 est ainsi scindée en deux tronçons : un tronçon amont 42 situé entre le connecteur 60 et la valve 44 de régulation de pression en fonction de la charge et un tronçon aval 43 situé entre la valve 44 de régulation de pression en fonction de la charge et la ligne 19 qui pilote les actionneurs 14 et 18 du premier groupe de freinage.

De nombreuses valves de régulation de pression susceptibles de former la valve de régulation fonction de la charge 44 sont connues en soit. La structure de la valve 44 ne sera donc pas décrite dans le détail par la suite. A titre d'exemple non limitatif la valve 44 peut être formée d'un limiteur de pression comprenant un corps qui loge un clapet anti-retour chargé par un ressort en regard d'un siège, la charge du ressort et par conséquent sa déformation étant réglable par un levier sensible à la charge de la remorque, pour modifier la pression d'ouverture de la valve 44. Un clapet anti-retour, passant dans le sens aval vers amont, est de préférence placé en parallèle du clapet limiteur de pression réglable, au sein de la valve 44, comme on le voit sur la figure 1.

Le premier groupe de freinage constitué de l'essieu 10 est donc alimenté directement par le tracteur à partir de la prise 60 via la valve de régulation 44. Il reçoit typiquement 140 cm3 en 0.6s.

Selon l'invention, le premier groupe de freinage est réglé pour produire au moins 13.5% du total des 50% exigés, quels que soient les réglages appliqués par les constructeurs entre les différents essieux, notamment pour éviter les blocages de roue. Ceci peut conduire à ce que l'essieu 10 du premier groupe de freinage soit le plus sollicité de tous les essieux.

Pour une remorque à 2 essieux, cet essieu 10 donne une efficacité totale de 25%. Pour une remorque à 3 essieux, il donne 16.67% d'efficacité (50% / 3).

Les actionneurs 24, 28 et respectivement 34, 38 sont reliés à des lignes d'alimentation respectives 29 et 39, elles-mêmes en liaison avec un tronçon de ligne commune d'alimentation 115 provenant de la ligne d'accumulateur.

L'accumulateur haute pression 100 est alimenté par une ligne 110 dite ligne supplémentaire venant du véhicule tracteur et alimentée lorsque la remorque est reliée au tracteur.

La pression de la ligne 110 commute ainsi typiquement entre une valeur nulle de 0 bar et par exemple une pression de 15 à 35 bars.

A cette fin la ligne supplémentaire 110 comprend un tronçon amont 112 adapté pour être connecté, par un connecteur 70 à une ligne 72 du véhicule tracteur recevant la pression précitée de 0 bar ou 15 à 35 bars provenant d'une source de pression constante régulée dédiée placée sur le tracteur. Cette source peut être par exemple alimentée par une pompe puisant dans une réserve d'huile. Il peut s'agir par exemple d'une source de pression auxiliaire pour divers organes, tels que des embrayages de boîte de vitesses ou des outils

Le tronçon amont 112 de la ligne 110 est équipé d'un manocontact 120 adapté pour détecter la montée en pression de la ligne 110 et ce faisant la bonne connexion de la ligne 110 avec la ligne 72 du tracteur. Le manocontact 120 détecte typiquement un seuil de pression de 12 bars et commute lorsque ce seuil est atteint.

La ligne 110 comprend un multiplicateur de pression 130 intercalé entre le tronçon 112 lié à la prise de connexion 70 de la ligne 110 sur le véhicule tracteur et la portion de ligne d'alimentation aval 113, 114 reliée à l'accumulateur 100.

Le multiplicateur de pression 130 peut faire l'objet de nombreux modes de réalisation. A titre d'exemple non limitatif le multiplicateur de pression 130 peut être un multiplicateur de pression linéaire à base d'un piston type « Minibooster » ou un multiplicateur de pression rotatif à base d'un diviseur de débit à engrenage. Le ratio d'amplification est de préférence de l'ordre de 10 pour atteindre une pression suffisante dans l'accumulateur 100.

La pression disponible en sortie du multiplicateur 130 dépend du niveau de la pression disponible sur la ligne supplémentaire 110 (typiquement compris entre 15 et 35 bars) et du rapport d'amplification.

A titre d'exemple non limitatif, pour une pression d'entrée de 15 bars et un rapport d'amplification de 11, une pression de 15b x 11 = 165b sera le niveau de pression maxi de l'accumulateur haute pression 100.

Dans le cas de plusieurs essieux, l'accumulateur 100 est adapté pour restituer le volume d'huile de 2 actionneurs pour une remorque de 2 essieux et 4 actionneurs pour une remorque à 3 essieux, soit d'une manière générale pour restituer le volume d'huile de 2 (X-1) actionneurs pour une remorque de X essieux.

Un clapet d'isolation 140 est intercalé entre la sortie du multiplicateur de pression 130 reliée à un tronçon de ligne d'alimentation 113 et un tronçon de ligne d'alimentation 114 relié à l'accumulateur 100. Le clapet d'isolation 140 est passant dans le sens allant de la sortie du multiplicateur de pression 130, soit le tronçon 113, vers le tronçon aval 114.

Un manocontact 102 placé sur le tronçon de ligne 114 permet de connaitre la pression de l'accumulateur haute pression 100.

Par ailleurs une valve relais 150 est intercalée entre les tronçons de ligne d'alimentation 114 et 115.

La valve relais 150 est pilotée par une valve de rupture d'attelage 160. Elle a pour fonction d'appliquer sur les lignes d'alimentation 29 et 39 de freinage du deuxième groupe, une pression de freinage provenant de la ligne 114 reliée à l'accumulateur 100, lorsque la valve de rupture d'attelage 160 pilotée par le manocontact 120 correspond à un niveau de pression seuil provenant de la ligne supplémentaire 110.

Ainsi la ligne d'alimentation 110 est scindée en 4 tronçons : un premier tronçon amont 112 adapté pour être relié par l'intermédiaire de la prise de connexion 70 à la ligne 72 venant du véhicule tracteur, un deuxième tronçon intermédiaire 113 séparé du premier tronçon 112 par le multiplicateur de pression 130, un troisième tronçon intermédiaire 114 qui est relié à l'accumulateur 100 et qui est séparé du deuxième tronçon 113 par le clapet d'isolation 140 et un quatrième tronçon 115 aval qui est relié aux lignes d'alimentation 29 et 39 et qui est séparé de la ligne 114 relié à l'accumulateur 100 par la valve relais 150.

L'on observera qu'une deuxième sortie du multiplicateur de pression 130 est relié par une ligne 132 au tronçon de ligne de commande 42 par l'intermédiaire d'un clapet anti-retour 134. Le clapet 134 est passant dans le sens allant du multiplicateur 130 vers le tronçon amont 42 de la ligne de commande 40. Cette sortie 132 du multiplicateur 130 a pour fonction de retourner au réservoir du tracteur, par l'intermédiaire de la ligne de commande 40, la portion d'huile exploitée par le multiplicateur de pression 130 pour assurer la fonction de multiplication de pression, mais non débitée sur la sortie 113. En effet pour fonctionner le multiplicateur de pression 130 « consomme » de l'huile. Pour 1 l transféré dans l'accumulateur 100, il rejette 9l pour un rapport de multiplication de 10. Cet excédent de 9 l doit retourner au réservoir du tracteur par l'intermédiaire de la ligne de commande qui n'est pas utilisée à ce moment-là. Le clapet 134 empêche l'huile de la ligne de commande 40 de remonter dans le multiplicateur de pression 130 dans les phases de freinage. Cette huile serait sinon consommée par le multiplicateur 130 qui pourrait tourner dans le mauvais sens et manquerait du côté des actionneurs de frein.

Une valve de séquence 200 est placée entre le tronçon amont 42 de la ligne de commande 40 et le tronçon 114 de ligne supplémentaire relié à l'accumulateur 100.

La valve de séquence 200 est adaptée pour être passante, du tronçon amont 42 de la ligne de commande 40 vers le tronçon 114 de ligne supplémentaire relié à l'accumulateur 100, lorsque la pression disponible dans le circuit hydraulique principal 40 est supérieure au niveau de tarage de la valve de séquence 200. La valve de séquence 200 permet ainsi lors du freinage d'alimenter également les lignes 29 et 39 si nécessaire et de recharger l'accumulateur 100.

Cette valve de séquence 200 peut par exemple être réglée à 115 bars (pression à laquelle l'efficacité nominale doit être atteinte). De ce fait, dès que le premier groupe de freinage associé à l'essieu 10 et piloté par la pression provenant du circuit hydraulique du véhicule tracteur, a atteint sa pression nominale, si la capacité disponible à partir de ce circuit, par exemple le volume standard de 140 cm3 n'a pas été consommé (c'est le cas avec 2 actionneurs de 50 cm3), le surplus est transféré vers le second groupe de freinage associés aux essieux 20 et 30.

Deux cas sont possibles :
- Soit l'accumulateur 100 a bien joué son rôle, et la pression du second groupe de freinage est aussi à la pression nominale : le volume supplémentaire disponible provenant du circuit hydraulique principal du véhicule tracteur fait monter la pression de l'ensemble au-dessus de la pression nominale et surtout gonfle l'accumulateur 100 pour un prochain freinage (les actionneurs qui sont dans ce cas déjà à 115 bars ne consomment plus beaucoup de volume, typiquement les 40 cm3 transférés selon l'exemple numérique précité vont presque exclusivement dans l'accumulateur 100).
- Soit l'accumulateur 100 est défaillant et le deuxième groupe de freinage n'est pas à la pression nominale. Les 40 cm3 disponibles contribuent à freiner bien que le deuxième groupe de freinage est en retard. La remorque a alors un niveau de freinage de type secours : 13.5% minimum pour une remorque à 3 essieux.

La valve de séquence 200 est de préférence formée d'un limiteur de pression réglable.

Selon le mode de réalisation illustré sur les figures annexées, la valve dite de rupture d'attelage 160 est pilotée par le manocontact 120. Elle assure elle-même le pilotage de la valve relais 150.

Selon ce mode de réalisation, la valve de rupture d'attelage 160 est formée d'un distributeur deux voies/deux positions à rappel mécanique par ressort et commande électromagnétique à partir du signal issu du manocontact 120, adapté pour assurer la commutation de la valve relais 150.

Cependant l'invention n'est pas limitée à ce mode de réalisation particulier de la valve de rupture d'attelage formée d'un distributeur à commande électromagnétique à partir d'un manocontact placé sur la ligne 112. Elle s'étend à tout moyen équivalent, d'une valve de détection de rupture d'attelage d'une remorque sur un tracteur, commutée entre deux états selon que la ligne 110 d'alimentation de l'accumulateur hydraulique 100 franchit ou non un seuil.

Pour détecter le bon fonctionnement de la ligne supplémentaire 110, on peut ainsi utiliser non pas un manocontact 120 et une valve électrique 160 comme décrit précédemment, mais utiliser une valve à pilotage hydraulique avec un ressort de rappel taré, par exemple à 12 bars. Dans les deux cas, on obtient ainsi une commutation de la valve 160 dans un sens à une pression supérieure ou égale à 12 bars et dans l'autre sens à une pression inférieure à 12 bars.

Une première entrée 162 de la valve de rupture d'attelage 160 est reliée au tronçon 43 de la ligne de commande 40.

Une deuxième entrée 164 de la valve de rupture d'attelage 160 est reliée au tronçon 114 de la ligne supplémentaire lié à l'accumulateur 100.

La sortie 166 de la valve de rupture d'attelage 160 est reliée à une commande hydraulique de commutation de la valve relais 150.

Lorsque le manocontact 120 détecte une pression supérieure à un seuil sur la ligne supplémentaire 110, il commute la valve de rupture d'attelage 160 dans la position illustrée sur la figure 2 dans laquelle la commande hydraulique de la valve relais 150 est pilotée par la pression de sortie de la valve de régulation 44 qui règne dans le tronçon de ligne 43, l'entrée 162 étant reliée à la sortie 166.

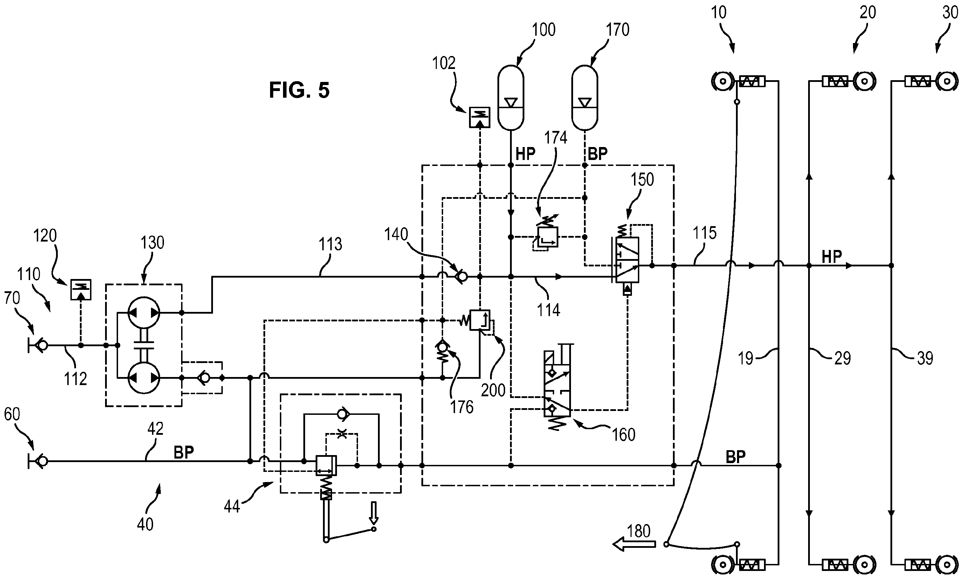

En revanche lorsque le manocontact 120 ne détecte pas de pression seuil sur la ligne supplémentaire 110 la valve de rupture d'attelage 160 revient dans la position illustrée sur les figures 1 et 5 dans laquelle la commande hydraulique de la valve relais 150 est pilotée par la pression qui règne dans le tronçon de ligne 114 relié à l'accumulateur 100, la sortie 166 étant alors reliée à l'entrée 164.

La valve relais 150 est formée d'un distributeur trois voies/deux positions à rappel mécanique par ressort et commande hydraulique à partir de la sortie de la valve de rupture d'attelage 160. La valve relais 150 est adaptée pour appliquer à la demande une pression sur les lignes 29 et 39 d'alimentation des actionneurs 24, 28 et 34, 38.

Plus précisément la valve relais 150 délivre sur sa sortie 156 une pression égale à la pression appliquée sur sa commande hydraulique. Ainsi la valve relais 150 fournit sur sa sortie 156 la pression régulée issue de la valve 44 lorsque cette pression lui est appliquée par la valve de rupture d'attelage 160. En d'autres termes la valve relais 150 recopie sur sa sortie 156, la pression régulée issue de la valve 44 lorsque cette pression est appliquée sur sa commande hydraulique, par la valve de rupture d'attelage 160.

Une première entrée 152 du distributeur 150 est reliée au tronçon de ligne 114 lié à l'accumulateur 100.

Une deuxième entrée 154 du distributeur 150 est reliée à une ligne 172 venant d'un accumulateur basse pression 170.

La sortie 156 du distributeur 150 conduit au tronçon de ligne 115 lié aux lignes 29 et 39 d'alimentation des actionneurs 24, 28 et 34, 38.

En position neutre telle qu'illustrée sur la figure 1, lorsque le manocontact 120 ne détecte pas de pression seuil dans la ligne d'entrée 72, la sortie 156 du distributeur 150 est reliée à l'entrée 154 et donc à la ligne basse pression 172.

En revanche lorsque le manocontact 120 détecte une pression seuil dans la ligne supplémentaire 110, la valve de rupture d'attelage 160 est commutée et la sortie 156 de la valve relais 150 est reliée à l'entrée 152 de sorte que la pression qui règne dans le tronçon de ligne 114 est appliquée aux lignes de commande 29 et 39.

Comme on le voit sur les figures annexées, le système de freinage conforme à l'invention comprend en outre un accumulateur basse pression 170 qui sert de « réservoir » pendant la phase de freinage qui dure quelques secondes en dynamique. En effet, à ce moment, la ligne de commande 42 n'est plus disponible puisqu'on freine. Or plusieurs valves fonctionnent avec une référence basse : c'est le cas des valves de régulations (44, 200 et 150). Ce réservoir 170 se vidange à nouveau par la ligne 42 dès la fin du freinage. Il est isolé de la ligne 42 pendant le freinage par le clapet 176. Concrètement, l'accumulateur peut être gonflé à 1 bar tandis que le clapet 176 est taré légèrement au-dessus (2 bar par exemple). De ce fait, l'accumulateur 170 ne se vide jamais totalement. L'accumulateur basse pression 170 est relié à une ligne 172 alimentée par un limiteur de pression 174 par le tronçon de ligne 114 relié à l'accumulateur haute pression 100.

L'accumulateur basse pression 170 permet ainsi d'assurer le drainage correct des valves de régulation pendant une phase de freinage.

Le limiteur de pression 174 est de préférence formé d'un limiteur de pression réglable.

La ligne 172 reliée à l'accumulateur basse pression 170 est reliée au tronçon de ligne 42 par l'intermédiaire d'un clapet de vidange 176 antiretour taré par ressort, passant dans le sens de la ligne 172 vers la ligne 42.

Comme on le voit sur les figures annexées, le système conforme à l'invention comprend en outre une commande de frein de parking par câble schématisée sous la référence 180, adaptée pour commander le serrage des freins 13 et 23 du premier groupe d'essieux lors du dételage de la remorque.

De préférence la valve relais 150, la valve de rupture d'attelage 160, le limiteur de pression 174, la valve de séquence 200, le clapet d'isolation 140 et le clapet de vidange 176, sont réunis dans un boîtier de commande commun 80 embarqué sur la remorque.

L'invention propose ainsi un composant 80 comprenant deux sorties de circuit de freinage, 43 et 115, l'une alimentée à partir du circuit hydraulique principal du tracteur et l'autre alimentée à partir d'un accumulateur 100.

On va maintenant décrire les étapes principales du fonctionnement du système de freinage conforme à l'invention, en regard des figures 2 à 5 annexées.

Comme représenté sur la figure 2, lors de la connexion de la remorque, une pression de 15 à 35 b s'établie dans la ligne supplémentaire 110. La valve de rupture d'attelage 160 est pilotée dès lors que le manocontact 120 commute. Ainsi la commande hydraulique de la valve relais 150 est reliée à la sortie de la valve de régulation 44 par l'intermédiaire de la valve 160. Le niveau de pression atteint dans l'accumulateur 100 haute pression dépend du rapport de cylindrée du multiplicateur de pression 130. La valve relais 150 est reliée à l'accumulateur basse pression 170 car la pression de sortie de la valve de régulation 44 n'est pas suffisante pour assurer la commutation de la valve 150. Les lignes 19, 29 et 39 sont en basse pression. Aucun freinage n'est appliqué sur la remorque.

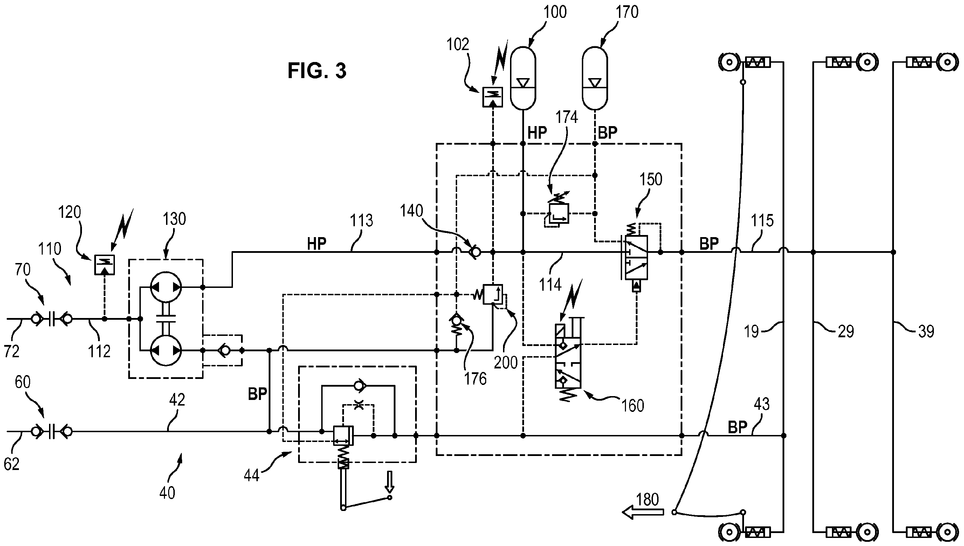

Comme illustré sur la figure 3, une fois le niveau de pression maximal atteint dans l'accumulateur 100 haute pression, un équilibre de pression se crée, le multiplicateur de pression 130 ne fournit plus de débit. Le manocontact 102 permet d'informer le chauffeur sur le niveau de pression dans l'accumulateur 100 et en particulier de l'alerter en cas de niveau bas de pression dans l'accumulateur 100. La valve 160 de rupture d'attelage reste dans la position précitée définie sur la figure 2. La valve relais 150 est toujours reliée à l'accumulateur basse pression 170 car la pression de sortie de la valve de régulation 44 n'est pas suffisante pour assurer la commutation de la valve 150. Les lignes 19, 29 et 39 sont en basse pression. Aucun freinage n'est appliqué sur la remorque.

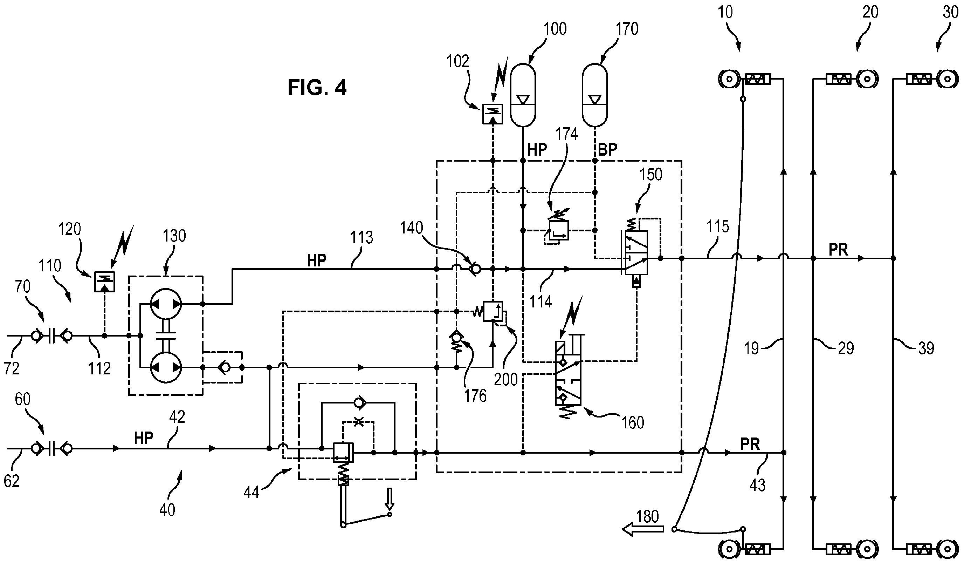

Comme illustré sur la figure 4, lorsque le chauffeur appuie sur sa pédale de frein de service, une pression comprise entre 0 et 150b s'établie sur la ligne de commande 40, plus précisément sur la ligne de sortie 62. Cette pression appliquée au tronçon 42 est régulée en fonction de la charge de la remorque via la valve de régulation de charge 44. L'essieu 10 est freiné via la valve de régulation de charge 44, tandis que les essieux 20 et 33 sont freinés via le circuit d'accumulateur à partir de la ligne 114. En effet la pression issue de la sortie de la valve de régulation 44, appliquée sur la commande hydraulique de la valve relais 150, permet de commuter cette valve relais 150 dans la position illustrée sur la figure 3 dans laquelle le tronçon 115 est relié à la ligne d'alimentation 114 liée à l'accumulateur 100.

De plus lorsque la pression disponible dans le circuit hydraulique principal 40 est supérieure au niveau de tarage de la valve de séquence 200, l'accumulateur 100 est rechargé grâce à la ligne de commande 40.

Comme illustré sur la figure 5, en cas de rupture d'attelage ou lorsque le chauffeur détèle sa remorque, les connexions 60 et 70 sont ouvertes. La pression dans la ligne supplémentaire 110 chute, entraînant le dé pilotage de la valve de rupture d'attelage 160. La commande hydraulique de la valve relais 150 est alors reliée à la ligne d'alimentation 114 liée à l'accumulateur 100.

La réserve d'énergie de l'accumulateur 100 est alors déchargée sur les deux essieux 20 et 30 via la valve relais 150. Les deux essieux 20 et 30 sont donc freinés.

Afin d'immobiliser la remorque, le mécanisme manuel 180 peut être actionné pour appliquer les freins sur le premier essieu 10.

L'invention permet d'être conforme à la réglementation en limitant le volume de la réserve d'énergie 100 et donc son prix, son encombrement et son temps de gonflage grâce à une séparation des moyens de freinage associés aux deux groupes d'essieux, 10 d'une part, 20 et 30 d'autre part.

Pour éviter un surdimensionnement de la réserve d'énergie formée par l'accumulateur 100, l'invention exploite les dispositions de l'article Annexe IV / C- Systèmes de freinage hydrauliques avec réserve d'énergie / 1.1.2. du texte 2015/68.

Cet article stipule en effet qu'aucune prescription de capacité n'est imposée lorsque l'on peut atteindre une efficacité au moins égale à celle du freinage de secours sans la réserve d'énergie.

Ce niveau d'efficacité est défini pour une remorque en annexe II point 3.2.3. Il est de 13.5%, sachant que le niveau d'efficacité du freinage de service est de 50%.

L'invention permet ainsi de limiter le volume de l'accumulateur 100 par rapport à une solution conforme à l'état de la technique dans laquelle un accumulateur seul est utilisé pour assurer le freinage.

Si l'on considère une remorque de 3 essieux et donc 6 actionneurs possédant chacun une capacité de 50 cm³, le volume requis d'huile, pour répondre à la norme qui exige 8 freinages et le maintien de la moitié de l'énergie pour un 9^{ème} freinage, soit 8,5 freinages, est de 6 x 50 cm³ x 8,5 = 2550 cm³ à une pression de 115 bars. Le calcul conduit à un volume requis de l'accumulateur 100 préchargé en azote de 17,45l selon l'état de la technique.

En revanche selon l'invention, l'exigence des 8,5 freinages n'étant plus nécessaire, on peut redimensionner l'accumulateur 100 pour un seul freinage sur 4 actionneurs. Le volume requis d'huile est alors de 4 x 50 cm³ = 200 cm³ à une pression de 115 bars et le calcul conduit à un volume requis de l'accumulateur 100 préchargé en azote de seulement 1,37l selon l'invention.

Ainsi dans le cadre de l'invention, le volume de l'accumulateur 100 conforme à l'invention est de préférence compris entre 1 et 2 litres, typiquement de l'ordre de 1,5 litres.

Un intérêt majeur du montage conforme à l'invention est d'optimiser le volume d'huile disponible. Le volume disponible à partir du circuit hydraulique principal 62 du véhicule tracteur, typiquement les 140 cm3, est d'abord dirigé pour faire la prestation minimum de freinage en priorité sur l'essieu 10. Puis, le reliquat de volume disponible est stocké sur la remorque dans l'accumulateur 100 pour un prochain freinage.

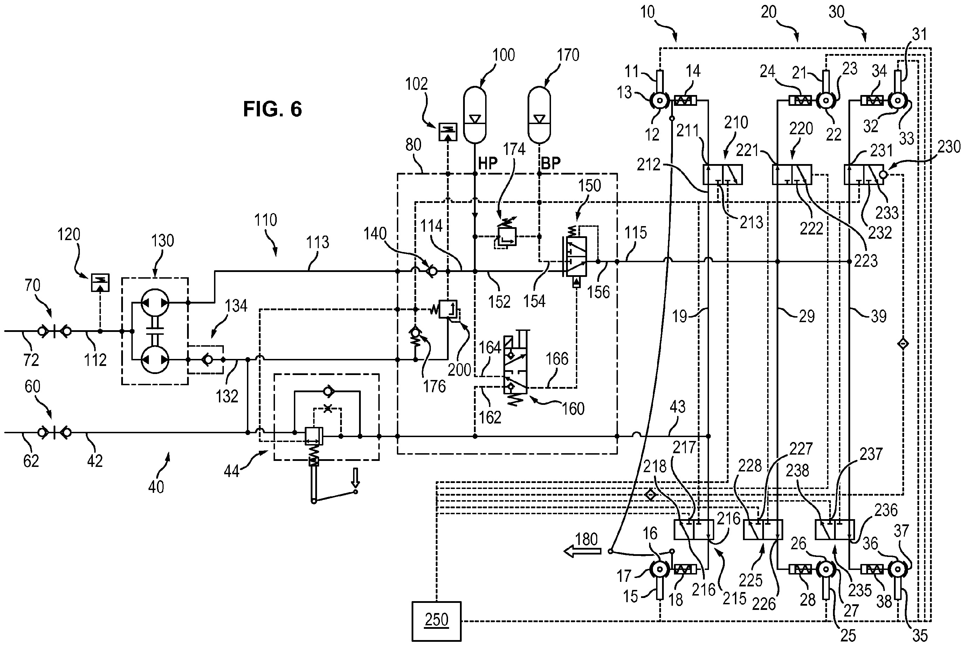

On va maintenant décrire une variante de réalisation du système conforme à la présente invention, illustrée sur la figure 6 annexée, qui permet notamment de rendre le système compatible avec un ABS (Antiblockiersystem en langue allemande ou "système anti-blocage de roues").

Comme on le voit sur la figure 6, selon cette variante, le système conforme à la présente invention comprend en plus de l'ensemble des composants précédemment décrits, une valve de décharge 3/2, référencée 210, 215, 220, 225, 230 et 235, associée respectivement à chaque actionneur de frein 14, 18, 24, 28 et 34, 38, ainsi qu'une unité centrale 250 qui pilote les valves précitées et des capteurs de vitesse 11, 15, 21, 25 et 31, 35 associées respectivement à chaque roue.

Les valves 210, 215, 220, 225, 230 et 235 sont des valves trois voies, deux positions. La sortie 211, 216, 221, 226 et 231, 236 des valves est reliée respectivement à un actionneur de frein 14, 18, 24, 28 et 34, 38.

Une première entrée 212, 217 des valves 210, 215 est reliée à la ligne d'alimentation 19.

Une première entrée 222, 227 des valves 220, 225 est reliée à la ligne d'alimentation 29.

Une première entrée 232, 237 des valves 230, 235 est reliée à la ligne d'alimentation 39.

Une deuxième entrée 213, 238 des valves 210, 215 est reliée à l'entrée de l'accumulateur basse pression 170.

On a représenté schématiquement sur la figure 6, les lignes de commande qui relie les capteurs de vitesse 11, 15, 21, 25 et 31, 35 à l'unité centrale 250 et cette dernière aux valves 210, 215, 220, 225, 230 et 235.

Pour obtenir une compatibilité avec un système ABS, il suffit de dimensionner à la fois l'accumulateur haute pression 100 et l'accumulateur basse pression 170 de sorte que les deux groupes de circuit de freinage est une source d'énergie suffisante pour ré-alimenter les vérins 14, 18, 24, 28 et 34, 38 après une phase de purge.

Le fonctionnement des valves 210, 215, 220, 225, 230 et 235 est essentiellement le suivant.

En position non pilotée telle qu'illustrée sur la figure 6, les valves sont neutres. Les vérins 14, 18, sont reliés à la ligne d'alimentation 19. Les vérins 24, 28 sont reliés à la ligne d'alimentation 29. Les vérins 34, 38 sont reliés à la ligne d'alimentation 39. Le freinage se fait normalement.

En position pilotée chaque valve 210, 215, 220, 225, 230 et 235 décharge le vérin associé 14, 18, 24, 28 et 34, 38 vers l'accumulateur basse pression 170 de la remorque.

Par la suite, lorsque les valves 210, 215, 220, 225, 230 et 235 sont dépilotées, chaque vérin 14, 18, 24, 28 et 34, 38 respectivement associé est regonflé soit par la pompe du tracteur si le vérin appartient au groupe 10 alimenté directement par le tracteur, (la pompe reçoit une consigne de pression et débite donc pour assurer cette pression. La pompe compense jusqu'à atteindre la pression requise si une partie du circuit n'est pas à cette pression), soit par l'accumulateur haute pression 100 si le vérin appartient au deuxième groupe d'essieux 20, 30.

Bien entendu la présente invention n'est pas limitée au mode de réalisation qui vient d'être décrit, mais s'étend à toute variante conforme à son esprit, tel que défini dans le jeu de revendications annexées.

## Revendications

1. Système de freinage hydraulique d'un véhicule à plusieurs essieux, en particulier d'une remorque à plusieurs essieux, comprenant deux circuits de freinage séparés (40, 110) associés respectivement à deux groupes d'essieux différents (10 ; 20, 30), l'un (40) des circuits de freinage étant alimenté par un circuit hydraulique principal du véhicule (62), tandis que l'autre circuit de freinage est alimenté par un accumulateur hydraulique (100), **caractérisé par le fait que** l'accumulateur hydraulique (100) est alimenté par une ligne basse pression (72) et que le circuit de freinage (40) alimenté par le circuit hydraulique principal du véhicule (62) est alimenté par une pompe (332) via une valve de régulation de pression (300) pilotée, directement ou indirectement, par une pédale de frein, cette valve de régulation de pression mettant en relation sélectivement la pompe (332), la ligne de frein (62) et un réservoir d'huile (360), les deux circuits de freinage opérant un freinage simultané.

2. Système selon la revendication 1, dans lequel le circuit de freinage comprenant l'accumulateur (100) comprend des moyens de mise en oeuvre lors d'un freinage automatique lors d'une rupture d'attelage.

3. Système selon l'une des revendications 1 ou 2, **caractérisé par le fait que** l'accumulateur hydraulique (100) est alimenté par une ligne basse pression (72, 110, 112), par l'intermédiaire d'un amplificateur de pression (130).

4. Système selon l'une des revendications 1 à 3, **caractérisé par le fait qu'**il comprend une valve de séquence (200) adaptée pour commuter le circuit hydraulique principal du véhicule tracteur (62, 40) sur le circuit de remplissage de l'accumulateur (100), lorsque le premier circuit de freinage délivre son couple de freinage nominal.

5. Système selon la revendication 4, **caractérisé par le fait que** la valve de séquence (200) est adaptée pour être passante, du circuit hydraulique principal (40) vers l'accumulateur (100), lorsque la pression disponible dans le circuit hydraulique principal (40) est supérieure au niveau de tarage de la valve de séquence (200).

6. Système selon l'une des revendications 4 ou 5, **caractérisé par le fait que** la valve de séquence (200) est formée d'un limiteur de pression réglable.

7. Système selon l'une des revendications 1 à 6, **caractérisé par le fait que** le véhicule comprend plusieurs essieux et l'accumulateur hydraulique (100) est adapté pour restituer le volume d'huile de 2 (X-1) actionneurs pour une remorque de X essieux.

8. Système selon l'une des revendications 1 à 7, **caractérisé par le fait que** le premier circuit de freinage est réglé pour produire au moins 13.5% du total des 50% de freinage minimal exigés.

9. Système selon l'une des revendications 1 à 8, **caractérisé par le fait que** le premier groupe d'essieu comprend un essieu unique (10) associé à un premier circuit de freinage alimenté par le circuit hydraulique principal du véhicule (62), tandis que le deuxième groupe d'essieux comprend deux essieux parallèles (20, 30) alimentés par l'accumulateur hydraulique (100).

10. Système selon l'une des revendications 1 à 9, **caractérisé par le fait que** des actionneurs (14, 18) du premier circuit de freinage sont reliés à une ligne de commande (40) qui reçoit une pression, lorsqu'un freinage est demandé par le chauffeur par appui sur la pédale de frein de service, par l'intermédiaire d'une valve de régulation fonction de la charge (44).

11. Système selon l'une des revendications 1 à 10, **caractérisé par le fait qu'**il comprend une valve (160) de détection de rupture d'attelage d'une remorque sur un tracteur, commutée entre deux états selon que la ligne (110) d'alimentation de l'accumulateur hydraulique (100) provenant d'une ligne supplémentaire (72) franchit ou non un seuil de pression .

12. Système selon la revendication 11, **caractérisé par le fait qu'**il comprend une valve relais (150) pilotée par la valve de rupture d'attelage (160) pour appliquer une pression de freinage provenant de l'accumulateur (100), lorsque la valve de rupture d'attelage (160) est dans une position correspondant à un niveau de pression seuil provenant de la ligne supplémentaire (72).

13. Système selon la revendication 12, **caractérisé par le fait que** la valve de rupture d'attelage (160) est formée d'un distributeur deux voies/deux positions à rappel mécanique par ressort et commande électromagnétique à partir du signal issu d'un manocontact (120) ou un distributeur à commande hydraulique.

14. Système selon l'une des revendications 12 ou 13, **caractérisé par** le fait la valve relais (150) est formée d'un distributeur trois voies/deux positions à rappel mécanique par ressort et commande hydraulique à partir de la sortie de la valve de rupture d'attelage (160).

15. Système selon l'une des revendications 1 à 14, **caractérisé par le fait qu'**il comprend en outre un accumulateur basse pression (170) destiné à assurer le drainage correct des valves de régulation pendant une phase de freinage.

16. Système selon l'une des revendications 1 à 15, **caractérisé par le fait qu'**il comprend un composant (80) comprenant deux sorties de circuit de freinage (43, 115), l'une alimentée à partir du circuit hydraulique principal du tracteur et l'autre alimentée à partir de l'accumulateur (100), le composant (80) réunissant une valve de séquence (200), une valve relais (150) et une valve de rupture d'attelage (160).

17. Système selon l'une des revendications 1 à 16, **caractérisé par le fait que** le volume de l'accumulateur (100) est compris entre 1 et 2 litres, typiquement de l'ordre de 1,5 litres.

18. Système selon l'une des revendications 1 à 17, **caractérisé par le fait qu'**il comprend une valve de décharge (210, 215, 220, 225, 230, 235) associée respectivement à chaque actionneur de frein (14, 18, 24, 28, 34, 38) et adaptée pour commuter l'entrée de chaque actionneur de frein en liaison soit avec une ligne d'alimentation (19, 29, 39), soit avec un accumulateur basse pression (170).

19. Système selon la revendication 18, **caractérisé par le fait qu'**il comprend un capteur de vitesse (11, 15, 21, 25, 31,35) associé à chaque roue et une unité centrale (250) qui pilote chaque valve de décharge en fonction de la vitesse mesurée.

20. Système selon l'une des revendications 1 à 19, **caractérisé par le fait que** la valve de régulation de pression (300) est adaptée pour délivrer une pression proportionnelle à une sollicitation de freinage.

21. Système selon l'une des revendications 1 à 20, **caractérisé par le fait que** les deux circuits de freinage (40, 110) sont placés sur une remorque et que le circuit hydraulique principal du véhicule (62) d'une part, et la ligne basse pression d'autre part, qui alimentent les deux circuits de freinage (40, 110) sont formés de lignes hydrauliques distinctes connectées aux deux circuits de freinage (40, 110) prévus sur la remorque par des connecteurs respectifs (60, 70).

22. Véhicule équipé d'un système de freinage conforme à l'une des revendications précédentes.

## Patentansprüche

1. Hydraulisches Bremssystem eines Fahrzeugs mit mehreren Achsen, insbesondere eines Anhängers mit mehreren Achsen, umfassend zwei separate Bremskreisläufe (40, 110), die jeweils zwei unterschiedlichen Achsgruppen (10; 20; 30) zugeordnet sind, wobei einer (40) der Bremskreisläufe durch einen hydraulischen Hauptkreislauf des Fahrzeugs (62) versorgt wird, während der andere Bremskreislauf durch einen Hydraulikspeicher (100) versorgt ist, **gekennzeichnet durch** die Tatsache, dass der Hydraulikspeicher (100) durch eine Niedrigdruckleitung (72) versorgt wird und dass der von dem hydraulischen Hauptdruck des Fahrzeugs (62) versorgte Bremskreislauf (62) durch eine Pumpe (332) über ein direkt oder indirekt durch ein Bremspedal gesteuertes Druckregelventil (300) versorgt ist, wobei dieses Druckregelventil selektiv die Pumpe (332), die Bremsleitung (62) und einen Öltank (360) in Verbindung bringt, wobei die zwei Bremskreisläufe gleichzeitig eine Bremsung bewirken.

2. System gemäß Anspruch 1, bei dem der den Speicher (100) umfassende Bremskreislauf Umsetzungsmittel bei einer automatischen Bremsung bei einem Anhängerkupplungsbruch umfasst.

3. System gemäß einem der Ansprüche 1 oder 2, **gekennzeichnet durch** die Tatsache, dass der Hydraulikspeicher (100) durch eine Niedrigdruckleitung (72, 110, 112) mittels eines Druckverstärkers (130) versorgt ist.

4. System gemäß einem der Ansprüche 1 bis 3, **gekennzeichnet durch** die Tatsache, dass es ein Sequenzventil (200) umfasst, das zum Schalten des hydraulischen Hauptschaltkreises des Zugfahrzeugs (62, 40) auf dem Füllkreislauf des Hydraulikspeichers (100) geeignet ist, wenn der erste Bremskreislauf sein nominales Bremsmoment ausgibt.

5. System gemäß Anspruch 4, **gekennzeichnet durch** die Tatsache, dass das Sequenzventil (200) geeignet ist, um vom hydraulischen Hauptkreislauf (40) zum Speicher (100) durchgängig zu sein, wenn der im hydraulischen Hauptkreislauf (40) verfügbare Druck höher ist als das Eichniveau des Sequenzventils (200).

6. System gemäß einem der Ansprüche 4 oder 5, **gekennzeichnet durch** die Tatsache, dass das Sequenzventil (200) aus einem einstellbaren Druckbegrenzer gebildet ist.

7. System gemäß einem der Ansprüche 1 bis 6, **gekennzeichnet durch** die Tatsache, dass das Ventil mehrere Achsen umfasst und der Hydraulikspeicher (100) geeignet ist, um das Ölvolumen von 2 (X-1) Betätigungsorganen für einen Anhänger mit X Achsen wieder herzustellen.

8. System gemäß irgendeinem der Ansprüche 1 bis 7, **gekennzeichnet durch** die Tatsache, dass der erste Bremskreislauf eingestellt ist, um wenigstens 13,5 % der Gesamtmenge der 50 % geforderten Mindestbremsung zu produzieren.

9. System gemäß irgendeinem der Ansprüche 1 bis 8, **gekennzeichnet durch** die Tatsache, dass die erste Achsgruppe eine einzige Achse (10) umfasst, die einem ersten, von dem hydraulischen Hauptkreislauf des Fahrzeugs (62) versorgten Bremskreislauf zugeordnet ist, während die zweite Achsgruppe zwei parallele Achsen (20, 30) umfasst, die von dem Hydraulikspeicher (100) versorgt werden.

10. System gemäß einem der Ansprüche 1 bis 9, **gekennzeichnet durch** die Tatsache, dass Betätigungsorgane (14, 18) des ersten Bremskreislaufs mit einer Steuerleitung (40) verbunden sind, die einen Druck empfängt, wenn eine Bremsung vom Fahrer per Druck auf das Betriebsbremspedal mittels eines von der Last (44) abhängigen Regelventils angefordert wird.

11. System gemäß einem der Ansprüche 1 bis 10, **gekennzeichnet durch** die Tatsache, dass es ein Detektionsventil (160) des Bruchs der Anhängerkupplung eines Anhängers an einer Zugmaschine umfasst, das zwischen zwei Zuständen, je nachdem, ob die von einer zusätzlichen Leitung (72) stammende Versorgungsleitung (110) des Hydraulikspeichers (100) einen Schwellendruck übersteigt oder nicht, geschaltet ist.

12. System gemäß Anspruch 11, **gekennzeichnet durch** die Tatsache, dass es ein von dem Detektionsventil (160) des Bruchs der Anhängerkupplung gesteuertes Relais-Ventil (150) zur Anwendung eines vom Speicher (100) stammenden Bremsdrucks umfasst, wenn das Detektionsventil (160) des Bruchs der Anhängerkupplung in einer Position angeordnet ist, die einem aus der zusätzlichen Leitung (72) stammenden Schwellendruckniveau entspricht.

13. System gemäß Anspruch 12, **gekennzeichnet durch** die Tatsache, dass das Ventil (160) des Bruchs der Anhängerkupplung durch einen Zweiwege- / Zweipositionen-Verteiler mit mechanischer Rückholung per Feder und elektromagnetischer Steuerung ausgehend von dem aus einem Öldruckschalter (120) oder einem Verteiler mit hydraulischer Steuerung stammenden Signal gebildet ist.

14. System gemäß einem der Ansprüche 12 oder 13, **gekennzeichnet durch** die Tatsache, dass das Relaisventil (150) durch einen Dreiwege- / Zweipositionen-Verteiler mit mechanischer Rückholung per Feder und hydraulischer Steuerung ausgehend von dem Ausgang des Ventil (160) des Bruchs der Anhängerkupplung gebildet ist.

15. System gemäß einem der Ansprüche 1 bis 14, **gekennzeichnet durch** die Tatsache, dass es darüber hinaus einen Niedrigdruckspeicher (170) umfasst, der zur Gewährleistung der ordnungsgemäßen Drainage der Regelventile während einer Bremsphase bestimmt ist.

16. System gemäß einem der Ansprüche 1 bis 15, **gekennzeichnet durch** die Tatsache, dass es ein zwei Bremskreislaufausgänge (43, 115) umfassendes Bauteil (80) umfasst, wobei eines ausgehend von dem hydraulischen Hauptkreislauf der Zugmaschine versorgt wird und das andere ausgehend von dem Speicher (100) versorgt wird, wobei das Bauteil (80) ein Sequenzventil (200), ein Relaisventil (150) und ein Ventil (160) des Bruchs der Anhängerkupplung zusammenfasst.

17. System gemäß einem der Ansprüche 1 bis 16, **gekennzeichnet durch** die Tatsache, dass das Volumen des Speichers (100) zwischen 1 und 2 Litern, typischerweise in der Größenordnung von 1,5 Litern inbegriffen ist.

18. System gemäß einem der Ansprüche 1 bis 17, **gekennzeichnet durch** die Tatsache, dass es ein Entlastungsventil (210, 215, 220, 225, 230, 235) umfasst, das jeweils jedem Bremsbetätigungsglied (14, 18, 24, 28, 34, 38) zugeordnet und geeignet ist, um den Eingang jedes Bremsbetätigungsgliedes in Verbindung entweder mit einer Versorgungsleitung (19, 29, 39) oder mit einem Niedrigdruckspeicher (170) zu schalten.

19. System gemäß Anspruch 18, **gekennzeichnet durch** die Tatsache, dass es einen jedem Rad zugeordneten Geschwindigkeitssensor (11, 15, 21, 25, 31, 35) und eine Zentraleinheit (250) umfasst, die jedes Entlastungsventil in Abhängigkeit von der gemessenen Geschwindigkeit steuert.

20. System gemäß einem der Ansprüche 1 bis 19, **gekennzeichnet durch** die Tatsache, dass das Druckregelventil (300) geeignet ist, um einen zu einer Bremsbeanspruchung proportionalen Druck auszugeben.

21. System gemäß einem der Ansprüche 1 bis 20, **gekennzeichnet durch** die Tatsache, dass die zwei Bremskreisläufe (40, 110) auf einem Anhänger angeordnet sind und dass der hydraulische Hauptkreislauf des Fahrzeugs (62) einerseits und die Niedrigdruckleitung andererseits, die die zwei Bremskreisläufe (40, 110) versorgen, aus unterschiedlichen hydraulischen Leitungen gebildet sind, die an die zwei auf dem Anhänger durch jeweilige Verbinder (60, 70) vorgesehenen Bremskreisläufe (40, 110) angeschlossen sind.

22. Mit einem Bremssystem gemäß einem der voranstehenden Ansprüche ausgerüstetes Fahrzeug.

## Claims

1. A hydraulic braking system of a vehicle with several axles, in particular a trailer with several axles, comprising two separated braking circuits (40, 110) respectively associated with two different axle groups (10; 20, 30), one (40) of the braking circuits being supplied by a main hydraulic circuit of the vehicle (62), whereas the other braking circuit is supplied with a hydraulic accumulator (100), **characterised in that** the hydraulic accumulator (100) is supplied with a low pressure line (72) and the braking circuit (40) supplied by the main hydraulic circuit of the vehicle (62) is supplied by a pump (332) via a pressure regulating valve (300) driven, directly or indirectly, by a brake pedal, this pressure regulating valve selectively communicating the pump (332), the brake line (62) and an oil tank (360), both braking circuits performing a simultaneous braking.

2. The system according to claim 1, wherein the braking circuit comprising the accumulator (100) comprises implementation means during an automatic braking during a hitch breakaway.

3. The system according to one of claims 1 and 2, **characterised in that** the hydraulic accumulator (100) is supplied by a low pressure line (72, 110, 112), through a pressure amplifier (130).

4. The system according to one of claims 1 to 3, **characterised in that** it comprises a sequence valve (200) adapted to switch the main hydraulic circuit of the towing vehicle (62, 40) to the filling circuit of the accumulator (100), when the first braking circuit delivers its nominal braking torque.

5. The system according to claim 4, **characterised in that** the sequence valve (200) is adapted to be ON, from the main hydraulic circuit (40) to the accumulator (100), when the available pressure in the main hydraulic circuit (40) is higher than the setpoint level of the sequence valve (200).

6. The system according to one of claims 4 and 5, **characterised in that** the sequence valve (200) is formed by an adjustable pressure limiting valve.

7. The system according to one of claims 1 to 6, **characterised in that** the vehicle comprises several axles and the hydraulic accumulator (100) is adapted to restore the oil volume of 2 (X-1) actuators for a trailer with X axles.

8. The system according to one of claims 1 to 7, **characterised in that** the first braking circuit is adjusted to produce at least 13.5% of all the 50% minimum braking demanded.

9. The system according to one of claims 1 to 8, **characterised in that** the first axle group comprises a single axle (10) associated with a first braking circuit supplied by the main hydraulic circuit of the vehicle (62), whereas the second axle group comprises two parallel axles (20, 30) supplied by the hydraulic accumulator (100).

10. The system according to one of claims 1 to 9, **characterised in that** actuators (14, 18) of the first braking circuit are connected to a control line (40) which receives a pressure, when a braking is requested by the driver by depressing the service brake pedal, through a regulating valve as a function of the load (44).

11. The system according to one of claims 1 to 10, **characterised in that** it comprises a hitch breakaway detecting valve (160) of a trailer on a tractor, switched between two states depending on whether the line (110) for supplying the hydraulic accumulator (100) from a further line (72) exceeds a pressure threshold or not.

12. The system according to claim 11, **characterised in that** it comprises a relay valve (150) driven by the hitch breakaway valve (160) to apply a braking pressure from the accumulator (100), when the hitch breakaway valve (160) is at a position corresponding to a threshold pressure level from the further line (72).

13. The system according to claim 12, **characterised in that** the hitch breakaway valve (160) is formed by an electromagnetically controlled spring-loaded two-way/two-position distributor from a signal from a pressure switch (120) or a hydraulically controlled distributor.

14. The system according to one of claims 12 and 13, **characterised in that** the relay valve (150) is formed by a hydraulically controlled spring-loaded three-way/two-position distributor from the output of the hitch breakaway valve (160).

15. The system according to one of claims 1 to 14, **characterised in that** it further comprises a low pressure accumulator (170) for ensuring proper drainage of the regulating valves during a braking phase.

16. The system according to one of claims 1 to 15, **characterised in that** it comprises a component (80) comprising two outputs of braking circuit (43, 115), the first one supplied from the main hydraulic circuit of the tractor and the other supplied from the accumulator (100), the component (80) joining a sequence valve (200), a relay valve (150) and a hitch breakaway valve (160).

17. The system according to one of claims 1 to 16, **characterised in that** the volume of the accumulator (100) is between 1 and 2 litres, typically in the order of 1.5 litre.

18. The system according to one of claims 1 to 17, **characterised in that** it comprises a discharge valve (210, 215, 220, 225, 230, 235) respectively associated with each brake actuator (14, 18, 24, 28, 34, 38) and adapted to switch the input of each brake actuator in connection with either a supply line (19, 29, 39), or a low pressure accumulator (170).

19. The system according to claim 18, **characterised in that** it comprises a speed sensor (11, 15, 21, 25, 31, 35) associated with each wheel and a central processing unit (250) which drives each discharge valve as a function of the speed measured.

20. The system according to one of claims 1 to 19, **characterised in that** the pressure regulating valve (300) is adapted to deliver a pressure proportional to a braking strain.

21. The system according to one of claims 1 to 20, **characterised in that** both braking circuits (40, 110) are placed on a trailer and the main hydraulic circuit of the vehicle (62) on the one hand, and the low pressure line on the other hand, which supply both braking circuits (40, 110) are formed by distinct hydraulic lines connected to both braking circuits (40, 110) provided on the trailer by respective connectors (60, 70).

22. A vehicle equipped with a braking system in accordance with one of the preceding claims.
